# EUROPÄISCHE PATENTSCHRIFT

(11) **EP 1 101 654 B1**
(45) Veröffentlichungstag und Bekanntmachung des Hinweises auf die Patenterteilung: **06.12.2006**
(21) Anmeldenummer: 00122291.8
(22) Anmeldetag: 20.10.2000
(51) Int. Cl.: B60Q 3/02, B60Q 3/04

(54) **Beleuchtungsvorrichtung für Gerätegruppen in Kraftfahrzeugen**
Lighting device for different instruments in a vehicle
Dispositif d'éclairage de groupe d'instruments dans un véhicule

(30) Priorität: 20.11.1999 DE 19955934
(43) Veröffentlichungstag der Anmeldung: 23.05.2001
(73) Patentinhaber: Volkswagen Aktiengesellschaft, 38436 Wolfsburg (DE)
(72) Erfinder: Lent-Philipps, Hans-Martin, Dr., 38518 Gifhorn (DE)

(56) Entgegenhaltungen:
- EP-A- 0 590 550
- US-A- 4 760 490
- PATENT ABSTRACTS OF JAPAN vol. 1999, no. 09, 30. Juli 1999 (1999-07-30) & JP 11 096810 A (MATSUSHITA ELECTRIC WORKS LTD), 9. April 1999 (1999-04-09)
- PATENT ABSTRACTS OF JAPAN vol. 2000, no. 07, 29. September 2000 (2000-09-29) & JP 2000 106069 A (MAZDA MOTOR CORP), 11. April 2000 (2000-04-11)

## Beschreibung

Die Erfindung betrifft eine Beleuchtungseinrichtung zur Beleuchtung einer Gruppe von Geräten in Kraftfahrzeugen, gemäß Oberbegriff des Patentanspruches 1.

Geräte im Kraftfahrzeug, welche üblicherweise in der Armaturentafel installiert sind, sind beispielsweise die Audioanlage, ggf. eine Telefonanlage, Klima- oder Heizungsregelelemente und dergleichen mehr. Zum Erkennen der besagten Geräte sind dieselben, gekoppelt an die Einschaltung bzw. Ausschaltung des Fahrlichtes am Kraftfahrzeug, bei Dunkelheit beleuchtet hinterlegt. Beleuchtet hinterlegt sind dabei die sogenannten Gerätebedienpanel. Die Bedientasten sind durchscheinend oder zumindest partiell durchscheinend, so daß man Zahlenwerte oder Symbole auf ihnen erkennen kann und in Dunkelheit dieselben auch erblicken kann.

Aus der gattungsbildenden DE 42 329 72C ist eine Beleuchtungsvorrichtung für eine Gerätegruppe in Kraftfahrzeugen bekannt, bei welcher über einen Näherungsschalter die Bedienpanel der Geräte ein- und ausgeschaltet werden. Die Hinterleuchtung der Bedienpennel der besagten Geräte ist dabei abhängig vom Signal des Näherungsschalters oder Näherungssensors, wodurch bei Nichtbedienung eines Gerätes das Bedienpanel auch dunkel geschaltet wird.

Dies hat den Nachteil, daß die Geräte als solches bezüglich ihres Einschaltzustandes nicht mehr erkannt werden können. Überdies wird zwar erreicht, daß der Fahrgastraum innen bei Nachtfahrten abgedunkelt ist, um eine Blendwirkung und Ablenkung zu vermeiden, jedoch bewirkt das Aufsuchen der Geräte viel eher eine Ablenkung, zumindest für den Zeitraum oder den Bewegungsablauf, bis man den Näherungsschalter erreicht hat. Bis dahin kann die Suche nach dem Gerät erheblich an Aufmerksamkeit des Fahrers in Anspruch nehmen.

Aus der DE 297 05 358 U 1 ist eine automatische Öffnung und Betätigung des Aschenbechers bei Annäherung mit der Hand bekannt.

Aus der DE 38 36 572 C 2 ist ein Radiogerät für Kraftfahrzeuge bekannt, welches mit einer Diffusorscheibe versehen ist. Diese Diffusorscheibe ist vor der Bedienblende des Autoradios angeordnet und soll im ausgeschalteten Zustand den Blick auf das Bedienpanel des Autoradios verhindern. Der hier dargestellte Aspekt gilt der Prävention von Autoradiodiebstahl, indem die freie Sicht auf das Gerät als solches im ausgeschalteten und somit auch verlassenen Fahrzeug verhindert wird.

Die Beleuchtung der Armaturen muß daher im allgemeinen so erfolgen, daß zum einen eine Blendwirkung vermieden wird, dies insbesondere bei Autofahrten in der Dunkelheit, zum anderen müssen die Geräte aber leicht erreichbar sein, was in der Gänze der genannten Forderungen vom Stand der Technik nicht geleistet wurde.

Der Erfindung liegt daher die Aufgabe zugrunde, eine Beleuchtungseinrichtung zur Beleuchtung einer Gruppe von Geräten in Kraftfahrzeugen, gemäß Gattung, dahingehend weiterzubilden, daß dieselbe ohne Blendwirkung das Auffinden und Bedienen der Geräte, auch bei Dunkelheit, erleichtert.

Bei einer Beleuchtungseinrichtung der gattungsgemäßen Art ist die gestellte Aufgabe erfindungsgemäß durch die kennzeichnenden Merkmale des Patentanspruches 1 gelöst.

Weitere vorteilhafte Ausgestaltung der erfindungsgemäßen Beleuchtungseinrichtungen sind in den übrigen Ansprüchen angegeben.

Kern der Erfindung besteht hierbei darin, daß in Abhängigkeit eines Signales eines Näherungsschalters die ein in der Nähe der Gerätegruppe derart angeordnetes Beleuchtungsmittel einschaltet, daß die betätigende Bedienhand oder die Finger während der Dauer der Bedienung am Gerät beleuchtbar sind. Hierbei hat man im Bezug auf die Bedienung von Geräten im Kraftfahrzeug bei Dunkelheit erkannt, daß ein entsprechend hinterleuchtetes Bedienpanel eines Gerätes zwar leicht auffindbar ist, daß jedoch das Heranführen der Hand, d.h., der Finger, zur Bedienung einzelner Tasten aber dennoch nicht begünstigt wird. Zu diesem Zweck wird über einen Näherungsschalter ausgelöst, daß Beleuchtungsmittel in der Art eingeschaltet werden, daß die betätigende Bedienhand oder deren Finger lokal beleuchtet werden. Durch eine solche, über die übliche Abdienpanelhinterleuchtung hinausgehende Beleuchtung, die im übrigen näherungssensorabhängig ist, wird das leichte Bedienen des Gerätes, auch bei Dunkelfahrten ermöglicht, wodurch die Bedienung derart erleichtert wird, daß nur ein kurzes Hinblicken notwendig ist und der Bedienvorgang ohne weitergehende Ablenkung erfolgen kann.

Dies erhöht nicht nur den Bedienkomfort, sondern auch die Sicherheit bei Gerätebedienungen in Dunkelfahrten.

Durch die Einbeziehung eines Näherungsschalters oder Näherungssensors wird diese externe bzw. geräteexterne oder Geräteanleuchtung nur kurzfristig generiert, d. h., für die Dauer der Gerätebedienung.

In weiterer vorteilhafter Ausgestaltung ist angegeben, daß die genannte Beleuchtungseinrichtung über einen Dämmerungssensor aktiviert wird. Somit kann über die Kopplung an den Schaltzustand der normalen Fahrlichtanlage am Kraftfahrzeug das System auch generiert werden, wenn kurzfristige Abdunkelungen durch Tunnelfahrten, Fahrten durch bewaldete Straßenabschnitte und dergleichen mehr erfolgen.

In weiterer vorteilhafter Ausgestaltung ist angegeben, daß der Dämmerungssensor entweder außen am Kraftfahrzeug angeordnet ist oder innen im Fahrgastraum. Ist er außen am Kraftfahrzeug angeordnet, so nimmt er die Außenlichtverhältnisse wahr und schaltet oder aktiviert das System entsprechend vom Außenlicht abhängig. In manchen Fällen, d.h. auch bei Tagesfahrten, jedoch bei entsprechender Abschattung, die lediglich Abdunklung im Fahrgastraum erzeugt, ist ein entsprechender Dämmerungssensor auch innen im Fahrgastraum hilfreich, um von dem abhängig die erfindungsgemäße Beleuchtungseinrichtung in erfindungsgemäßer Weise zu aktivieren.

In weiterer vorteilhafter Ausgestaltung ist angegeben, daß die entsprechend aktivierten Beleuchtungsmittel derart angeordnet sind, daß sie von oben nach unten leuchten. Auf diese Weise wird einfach vermieden, daß der Fahrer hierdurch geblendet werden könnte.

In weiterer vorteilhafter Ausgestaltung und entsprechend einer optimalen Ausleuchtung ist der beleuchtete Bereich der Gerätegruppe frontseitig geneigt. D.h., er ist nicht streng vertikal lotrecht, sondern er ist beispielsweise leicht geneigt, so daß das von oben nach unten leuchtende Licht die entsprechende Gerätegruppe auf die entsprechende Weise beleuchtet.

In weiterer vorteilhafter Ausgestaltung ist angegeben, daß das Beleuchtungsmittel nach oben abgedeckt ist, so daß kein Licht nach oben strahlt, wodurch die Blendung des Fahrers in der bereits beschriebenen Weise verhindert wird.

Des weiteren ist angegebenen, daß der Näherungssensor nahe den eigentlichen Bedienelementen der Gerätegruppe angeordnet ist, um tatsächlich nur bei lokaler Annäherung direkt im genannten Gerätegruppenbereich ein entsprechendes Aktivierungssignal zu geben.

In letzter vorteilhafter Ausgestaltung der Erfindung ist angegeben, daß der Näherungssensor auf Infrarotbasis arbeitet, wodurch er einfach und effizient realisierbar ist.

Die Erfindung ist in der Zeichnung dargestellt und nachfolgend näher beschrieben.

Es zeigt:
- Figur 1:: Armaturentafel eines Kraftfahrzeuges mit erfindungsgemäßer Anordnung der Beleuchtungsmittel.
- Figur 2:: Frontansicht auf Armaturentafel in entsprechender Anordnung der Beleuchtungsmittel und dem Näherungssensor.

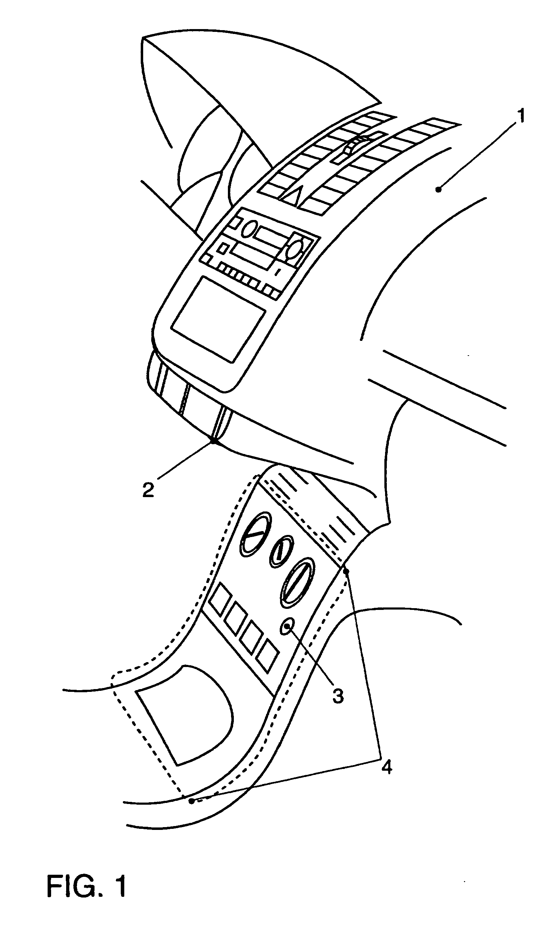

Figur 1 zeigt in perspektivischer Seitenansicht ein modernes Armaturentafelelement 1 eines Kraftfahrzeuges. Im unteren Bereich ist zu erkennen, daß der besagte Gerätegruppenbereich in erfindungsgemäßer Weise der zu beleuchtende Bereich 4 sein soll. Die Bedienhand wird dabei als solches näherungssensormäßig erfaßt, und daraufhin werden die Bedienhand oder die Bedienfinger lokal beleuchtet werden. Hierzu ist der genannte Gerätegruppenbereich nach hinten geneigt, und das Beleuchtungsmittel ist oberhalb der zu beleuchtenden Gerätegruppe bzw. der entsprechenden Bedienhand, für diese besagte, zu beleuchtende Gerätegruppe, unterhalb eines Vorsprunges des oberen Armaturentafelbereiches angeordnet.

Hierdurch wird zum einen gewährleistet, daß das Beleuchtungsmittel 2 nur noch Licht nach unten abstrahlt und zum anderen ein nach oben gerichtetes Reflektieren von Licht durch den besagten Vorsprung verhindert wird. In dieser Weise findet nur lediglich eine Lokalbeleuchtung statt, um eine Blendwirkung im Fahrgastraum bei Nacht- oder Morgenfahrten zu vermeiden. Das Licht ist entsprechend so lokalisiert, daß kein weitergehendes Streulicht entstehen sollte bzw. entstehen kann. Der Näherungssensor 3 ist direkt im Bereich der Gerätegruppe, d.h., im Armaturentafelbereich, lokal dort angeordnet, wo auch die Hände die entsprechende Bedienung übernehmen sollen. Durch diese integrale Vorsehung des Näherungssensors ist derselbe einfach und ohne jedwede Bedienstörung integriert.

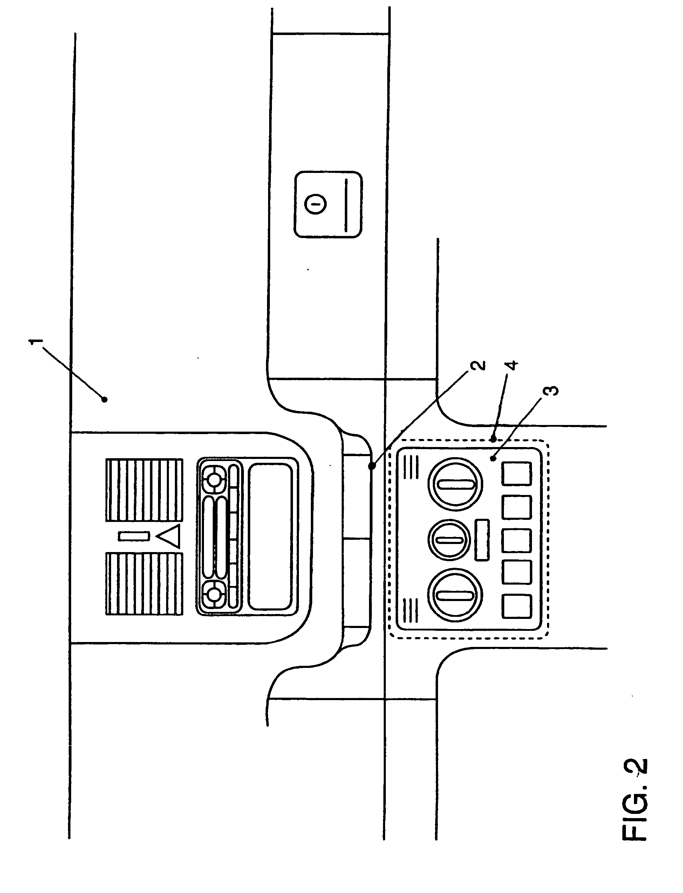

Figur 2 zeigt eine entsprechende Ansicht nochmal in frontaler Sicht auf den Armaturentafelbereich 1. Der auszuleuchtende Bereich 4 ist unterhalb eines Vorsprunges, unterhalb dessen das Beleuchtungsmittel 2 in entsprechender Weise angeordnet ist, so daß nur Licht nach unten abgestrahlt wird.

Der Näherungssensor 3 ist auch in der hier dargestellten Weise in dem Gerätegruppenbereich integriert platziert.

## Patentansprüche

1. Beleuchtungseinrichtung zur Beleuchtung einer Gruppe von Geräten in Kraftfahrzeugen,
**dadurch gekennzeichnet,**
**daß** in Abhängigkeit eines Signales eines Näherungsschalters (3), das in der Nähe der Gerätegruppe angeordnete Beleuchtungsmittel (2) einschaltet, derart, daß die betätigende Bedienhand während der Dauer der Bedienung am Gerät ausleuchtbar ist.

2. Beleuchtungseinrichtung nach Anspruch 1,
**dadurch gekennzeichnet,**
**daß** die genannte Beleuchtungseinrichtung zusätzlich über einen Dämmerungssensor aktiviert wird.

3. Beleuchtungseinrichtung nach Anspruch 2,
**dadurch gekennzeichnet,**
**daß** der Dämmerungssensor außen am Kraftfahrzeug angeordnet ist.

4. Beleuchtungseinrichtung nach Anspruch 2,
**dadurch gekennzeichnet,**
**daß** der Dämmerungssensor innen im Fahrgastraum angeordnet ist.

5. Beleuchtungseinrichtung nach einem der vorhergehenden Ansprüche,
**dadurch gekennzeichnet,**
**daß** die Beleuchtungsmittel (2) derart angeordnet sind, daß sie von oben nach unten leuchten.

6. Beleuchtungseinrichtung nach einem der vorhergehenden Ansprüche,
**dadurch gekennzeichnet,**
**daß** das Beleuchtungsmittel (2) nach oben abgedeckt ist, so daß kein Licht nach oben strahlt.

7. Beleuchtungseinrichtung nach einem der vorhergehenden Ansprüche,
**dadurch gekennzeichnet,**
**daß** der Näherungssensor (3) nahe den eigentlichen Bedienelementen der Gerätegruppe angeordnet ist.

8. Beleuchtungseinrichtung nach Anspruch 7,
**dadurch gekennzeichnet,**
**daß** der Näherungssensor (3) auf Infrarotbasis arbeitet.

## Claims

1. Lighting device for lighting a group of instruments in motor vehicles, **characterized in that** the lighting means (2) arranged in proximity to the instrument group are switched on as a function of a signal of a proximity switch (3) so that the operator's working hand can be illuminated while it is acting on the instrument.

2. Lighting device according to Claim 1, **characterized in that** the said lighting device is additionally activated via a twilight sensor.

3. Lighting device according to Claim 2, **characterized in that** the twilight sensor is arranged externally on the motor vehicle.

4. Lighting device according to Claim 2, **characterized in that** the twilight sensor is arranged internally in the passenger compartment.

5. Lighting device according to one of the preceding claims, **characterized in that** the lighting means (2) are arranged so that they illuminate from the top downwards.

6. Lighting device according to one of the preceding claims, **characterized in that** the lighting means (2) is covered at the top so that no light radiates upwards.

7. Lighting device according to one of the preceding claims, **characterized in that** the proximity sensor (3) is arranged near the actual operating elements of the instrument group.

8. Lighting device according to Claim 7, **characterized in that** the proximity sensor (3) operates on the basis of infrared.

## Revendications

1. Dispositif d'éclairage servant à éclairer un groupe d'appareils dans des véhicules automobiles, **caractérisé en ce qu'**en fonction d'un signal d'un détecteur de proximité (3), le moyen d'éclairage (2) disposé dans le voisinage d'un groupe d'appareils s'allume de manière telle que la main effectuant la manoeuvre peut être éclairée pendant la durée de la manoeuvre de l'appareil.

2. Dispositif d'éclairage selon la revendication 1, **caractérisé en ce que** le dispositif d'éclairage cité est en plus activé via un détecteur crépusculaire.

3. Dispositif d'éclairage selon la revendication 2, **caractérisé en ce que** le détecteur crépusculaire est disposé à l'extérieur du véhicule automobile.

4. Dispositif d'éclairage selon la revendication 2, **caractérisé en ce que** le détecteur crépusculaire est disposé à l'intérieur, dans l'habitacle du véhicule.

5. Dispositif d'éclairage suivant l'une quelconque des revendications précédentes, **caractérisée en ce que** les moyens d'éclairage (2) sont disposés de manière telle qu'ils éclairent du haut vers le bas.

6. Dispositif d'éclairage suivant l'une quelconque des revendications précédentes, **caractérisée en ce que** le moyen d'éclairage (2) est recouvert vers le haut de sorte qu'aucune lumière ne rayonne vers le haut.

7. Dispositif d'éclairage suivant l'une quelconque des revendications précédentes, **caractérisée en ce que** le détecteur de proximité (3) est disposé au voisinage des organes de commande proprement dits du groupe d'appareils.

8. Dispositif d'éclairage selon la revendication 7, **caractérisé en ce que** le détecteur de proximité (3) fonctionne en mode infrarouge.
